(19) Europäisches Patentamt
European Patent Office
Office européen des brevets

(11) Publication number: 0 261 808 A2

# (12) EUROPEAN PATENT APPLICATION

(21) Application number: 87307530.3

(51) Int. Cl.[4]: C08F 210/16 , C08F 4/64

(22) Date of filing: 25.08.87

(30) Priority: 25.08.86 JP 197328/86
25.08.86 JP 197329/86

(43) Date of publication of application:
30.03.88 Bulletin 88/13

(84) Designated Contracting States:
BE DE FR GB IT NL SE

(71) Applicant: TOA NENRYO KOGYO KABUSHIKI KAISHA
1-1 Hitotsubashi, 1-Chome Chiyoda-Ku
Tokyo 100(JP)

(72) Inventor: Ueki, Satoshi
4-7-301 Tate 2-chome
Shiki-shi Saitama-ken(JP)
Inventor: Maruyama, Kouji
13-8 Chuou 2-chome
Kamifukuoka-shi Saitama-ken(JP)
Inventor: Ueno, Hiroshi
398-1 Ooaza Haneo Namegawa-machi
Hiki-gun Saitama-ken(JP)
Inventor: Mizukami, Haruo
71 Higashifukai
Nagareyama-shi Chiba-ken(JP)

(74) Representative: Dew, Melvyn John et al
Exxon Chemical Limited Exxon Chemical
Technology Centre P.O. Box 1
Abingdon Oxfordshire, OX13 6BB(GB)

## (54) Method for production of ethylene - propylene copolymer rubber.

(57) A method is provided for production an ethylene-propylene copolymer rubber in the presence of a polymerization catalyst composed of a component (X) obtained by contacting a metal oxide with a magnesium compound ($R^1MgR^2$) and subsequently contacting the resulting product with a titanium compound or optionally first with an alcohol or a silicon compound ($SiR^3_nR^4{}_{4-n}$) prior to contacting with the titanium compound and a component (Y) which is an organoaluminum compound. In the magnesium and silicon compounds, $R^1$ and $R^3$ represent a hydrocarbyl or hydrocarbyloxy group and $R^2$ and $R^4$ represent a hydrocarbyl or hydrocarbyloxy group or a halogen atom and n represents an integer having a value of 1 to 3.

EP 0 261 808 A2

# METHOD FOR PRODUCTION OF ETHYLENE-PROPYLENE COPOLYMER RUBBER

This invention relates to a method for the production of an ethylene-propylene copolymer rubber.

It has been known in the art which produces an ethylene-propylene copolymer rubber by copolymerizing ethylene and propylene, that a more active titanium type catalyst may be used in the place of the conventional vanadium type catalyst.

Recently, several methods for the production of the aforementioned copolymer rubber by the use of a varying magnesium compound-carried titanium catalyst have been tried. They, however, have the disadvantage that they are complicated in terms of procedure and the polymers produced thereby possess too low bulk density to suit pratical use.

Separately, methods have been reported which aim mainly to produce a polymer of particularly advantageous particle properties by copolymerizing ethylene and propylene, preferably in the gaseous phase, using a catalyst component having a titanium component deposited on such a metal oxide as silica.

For example, a method which uses a solid catalyst component obtained by the contact of (1) a metal oxide with (2) the reaction product of a magnesium halogenide with a compound of the formula, $Me(OR)_nX_{z-n}$, (3) a silicon compound of the formula, $R^2(R^1R^3SiO)_nR^4$ and (4) a titanium compound (specification of Japanese Patent Application Disclosure SHO 59 (1984)-105,008) or a method which uses a catalyst obtained by diluting a composition represented by the formula, $Mg_mTi(OR)_nX_p(ED)_q$[wherein X stands for a halogen atom and ED for an electron-donating compound], with a metal oxide and further activating the diluted composition with an organoaluminum compound (specification of Japanese Patent Application disclosure SHO 59(1984)-230,011) have been proposed.

Though these methods for producing the copolyer by the use of such a metal oxide-supported titanium type catalyst as mentioned above permit production of a polymer having somewhat improved particle properties, they have the disadvantage that the yield of the polymer based on the amount of the polymerization catalyst to be used is small.

It has now been found that an ethylene-propylene copolymer of outstanding particle properties can be produced in a high yield by the use of a metal oxide-supported titanium type catalyst. More particularly it has been found that the foregoing ethylene-propylene copolymer can be produced by copolymerizing ethylene and propylene using a catalyst component proposed for the production of polyethylene (specifications of Japanese Patent Application disclosure SHO 46(1971)-2,258, SHO 51(1976)-47,990, SHO 57(1982)-90,004, SHO 57 (1982)-85,805, and SHO 57 (1982)-200,408) and produced by bring (A) a metal oxide into contact with (B) a magnesium compound of the general formula, $R^1MgR^2$, optionally further with (C) an alcohol or a silicon compound and subsequently with (D) a titanium compound.

## SUMMARY OF THE INVENTION

In accordance with the present invention there is provided a method for the production of an ethylene-propylene copolymer rubber having an ethylene content of 15 to 90 mol%, which method comprises copolymerizing ethylene and propylene in the presence of a polymerization catalyst comprise of:

(X) a catalyst component obtained by contacting (A) a metal oxide with (B) a magnesium compound of the general formula, $R^1MgR^2$ [wherein $R^1$ represents a hydrocarbyl or a hydrocarbyloxy group and $R^2$ represents a hydrocarbyl group, a hyrdrocarbyloxy group or a halogen atom], and subsequently contacting the resulting product with (D) a titanium compound, and (Y) an organoaluminum compound.

In a one embodiment of this invention the resulting product obtained by contacting (A) with (B) as hereinabove described is contacted with (C) an alcohol prior to contacting with the titanium compound (D).

In a further embodimnt of the invention the resulting product obtained by the contacting of (A) with (B) is contacted with (C) a silicon compound of the general formula $SiR^3R^4$4-n, wherein $R^3$ represents a hydrocarbyloxy group or a halogen atom, $R^4$ represents a member selected from the group consisting of hydrogen atom, a hydrocarbyl group, a hydrocarbyloxy group, and halogen atoms and n represents an integer having a value of 1 to 3, prior to contacting with the titanium compound (D).

The copolymerization can be conducted in the liquid phase using an ethylene to propylene molar ratio in the range of 0.01 to 1.0 or in the gaseous phase with an ethylene to propylene molar ratio of 0.03 to 3.0.

## BRIEF DESCRIPTION OF THE DRAWING

The Figure is a schematic flow plan of the process of the present invention.

## DETAILED DESCRIPTION OF THE INVENTION

### Raw Materials for Preparation of Catalyst component

(a) Metal Oxide

The metal oxide to be used in the present invention is the oxide of an element selected from among the elements of Groups 11 through IV in the Periodic Table of Elements. As examples of the metal oxide, there can be cited $B_2O_3$, MgO, $Al_2O_3$, $SiO_2$, CaO, $TiO_2$, ZnO, ZrO, $ZrO_2$, SnO , BaO, and $ThO_2$. Among the metal oxides cited above, $B_2O_3$, MgO, $Al_2O_3$, $SiO_2$, $TiO_2$, and ZrO prove to be desirable and SiO proves to be particularly desirable. Further, composite oxides which contain the aforementioned metal oxides are also usable. Examples of such composite oxides include $SiO_2$ -MgO, $SiO_2$-$Al_2O_3$, $SiO_2$-$TiO_2$, $SiO_2$-$V_2O_5$, $SiO_2$-$Cr_2O_3$, and $SiO_2$-$TiO_2$-MgO.

Though the aforementioned metal oxides and composite oxides are basically desired to be anhydrides, they are allowed to contain hydroxides in generally tolerated amounts. They are also allowed to contain impurities in amounts not so large as to impair their quality notably. As concrete examples of the impurities whose presence. is tolerated as described above, there can be cited oxides, carbonates, sulfates, and nitrates as sodium oxide, potassium oxide, lithium oxide, sodium carbonate, potassium carbonate, calcium carbonate, magnesium carbonate, sodium sulfate, aluminum sulfate, barium sulfate, potassium nitrate, magnesium nitrate, and aluminum nitrate.

Generally, these metal oxides are put to use in a powdered form. The size and shape of the particles of the powdered metal oxide more often than not affect the form of the olefin polymer to be consequently produced and therefore, are desired to be suitably adjusted. The metal oxide, preparatorily to actual use, is desired to be fired at the highest allowable temperature for the purpose of eliminating poisoned substances and subsequently handles so as not to be exposed to the ambient air.

(B) Magnesium compound

The magnesium compound to be used in the present invention is represented by the general formula, $R^1MgR^2$. In the formula, $R^1$ stands for a hydrocarbyl group (alkyl, cycloalkyl, aryl, or aralkyl group) having 1 to 20 carbon atoms or a hydrocarbyloxy group (alkoxy or aryloxy group) having 1 to 20 carbon atoms and $R^2$ for a hydrocarbyl group (alkyl, cycloalkyl, aryl, or aralkyl group) having 1 to 20 carbon atoms, a hydroxycarbyloxy group (alkoxy or aryloxy group) having 1 to 20 carbon atoms, or a halogen atom.

Examples of the magnesium compound will be cited below, using the abbreviations Mg = magnesium, Me = methyl, Et = ethyl, Pr = propyl, Bu = butyl, Pe = pentyl, He = hexyl, Ph = phenyl, Bz = benzyl, Cl = chlorine, Br = bromine, and I = iodine.

Examples containing hydrocarbyl groups both as $R_1$ and $R^2$:

Me Mg, Et Mg, Pr Mg, i-Pr Mg, EtPrMg, Bu Mg, i-Bu Mg, sec-Bu Mg, tert-Bu Mg, BuEtMg, Pe Mg, i-Pe Mg, EtPeMg, He Mg, EtHeMg, BuHeMg, (2-EtBu)EtMg, diheptyl Mg, dioctyl Mg, butylcyclohexyl Mg, Ph Mg, EtPhMg, BuPhMg, ditolyl Mg, dixylyl Mg, Bz Mg, diphenethyl Mg, and ethylphenethyl Mg.

These magnesium compounds may be in the form of mixtures with organic compounds of other metals or in the form of complex compounds. The organic compounds of other metals mentioned above are represented by the general formula, $Mr_n$ (wherein M stands for boron, beryllium, aluminum, or zinc, R for an alkyl, cycloalkyl, aryl, or aralkyl group having 1 to 20 carbon atoms, and n for the valency of the metal atom M). As concrete examples of such organic compounds of other metals, there can be cited triethyl aluminum, tributyl aluminum, triisobutyl aluminum, triphenyl aluminum, triethyl boron, tributyl boron, diethyl beryllium, diisobutyl beryllium, diethyl zinc, and dibutyl zinc.

The ratio of the organic compound of other metal to the magnesium compound in the aforementioned mixture or complex compound is generally such that the amount of the other metal is not more than 2 gram atoms, preferably not more than 1 gram atom, per gram atom of magnesium.

Examples containing a hydrocarbyl group as $R^1$and a hydrocarbyloxy group as $R^2$:

There can be cited MeMg(OEt), EtMg(OEt), EtMg(OBu), PrMg(OEt), BuMg(OEt), BuMg(OBu), i-BuMg-(OBu), tert-BuMg(OEt), HeMg(OEt), PhMg(OEt), PhMg(OBu), and PhMg(Oph).

Examples containing hydrocarbyloxy groups both as $R^1$ and as $R_2$:

There can be cited $Mg(OMe)_2$, $Mg(OEt)_2$, Mg(OEt) (OBu), $Mg(OPr)_2$, $Mg(Oi\text{-}Pr)_2$, $Mg(OBu)_2$ , $Mg(Oi\text{-}Bu)_2$ , $Mg(OHe)_2$, $Mg(Octyloxy)_2$, $Mg(OPh)_2$ and $Mg(OBz)_2$.

Examples containing a hydrocarbyl group as $R^1$ and a halogen atom as $R^2$:

There can be cited EtMgCl, PrMgCl, i-PrMgCl, BuMgCl, i-BuMgCl, sec-BuMgCl, tert-BuMgCl, PeMgCl, HeMgCl, (2-EtHe)MgCl, octyl-MgCl, ecyl MgCl, cyclohexyl MgCl, PhMgCl, tolyl MgCl, xylyl MgCl, BzMgCl, EtMgBr, BuMgBr, tert-BuMgBr, HeMgBr octyl MgBr, cyclobexyl MgBr, PhMgBr, EtmGl, BuMgl, (2-EtHe)-Mgl, and PhMgl.

(C) Alcohol or Silicon compound

As examples of the alcohol usable in this invention, there can be cited methanol, ethanol, propanol, i-propanol, butanol, i-butanol, tert-butanol pentanol, hexanol, 2-ethylhexanol, cyclohexanol, phenol, benzyl alcohol, and phenethyl alcohol.

Further, halogen-containing alcohols which result from the substitution of a halogen atom for a desired hydrogen atom in such alcohols except for the hydrogen atom in the hydroxyl group are also usable herein. As examples of such alcohols, there can be cited 2-chloroethanol, 1-chloro-2-propanol, 4-chloro-1-butanol, 5-chloro-1-pentanol, 6-chloro-1-hexanol, 2-chlorocyclohexanol, (m,o,p)-chloropohenol, (m,o,p)-chlorobenzyl alcohol, 2-bromoethanol, 1-bromo-2-butanol, (m,o,p)-bromophenol, 2,2-dichloroethanol, 1,3-dichloro-2-propanol, 2,4-dibromophenol, 2,2,2-trichloroethanol, 1,1,1-trichloro-2-propanol, and 2,3,4-trichlorophenol.

The silicon compound to be used is represented by the general formula, $SiR^3$ $R^4$. In this formula, $R^3$ stands for a hydroxy-carbyloxy group (alkoxy or aryloxy group) having 1 to 20 carbon atoms or a halogen atom, $R^4$ for at least one group selected from among a hydrogen atom, a hydrocarbyl group (alkyl, cycloalkyl, aryl, or aralkyl group) having 1 to 20 carbon atoms, a hydrocarbyloxy group (alkoxy or aryloxy group) having 1 to 20 carbon atoms, and halogen atoms, and n for an integer of the value of 1 to 3.

Concrete examples of the silicon compound will be cited below, using the same abbreviations as in the case of the aforementioned magnesium compound. In addition, silicon will be abbreviated as "Si."

Examples containing hydrocarbyloxy groups both as $R^3$ and $R^4$:

There can be cited Si(OMe) ,Si(OEt) ,Si(OBu) ,Si(Oi-Bu) , Si(OHe) Si(OPh) ,Si(OEt) (OBu) ,Si(OEt) (OHe) , Si(OEt) (OPh) , and Si(OBu) (OPh) .

Examples containing halogen atoms both as $R^3$and $R^4$:

There can be cited SiCl , SiBr , and SiI .

Examples containing a hydrocarbyloxy group as $R^3$and a hydrocarbyl group as $R^4$:

There can be cited $MeSi(OMe)_3$ , $Me_2Si(OEt)_2$ , $MeSi(OBu)_3$ , $EtSi(OMe)_3$, $Et_2Si(OMe)_2$, $Et_2Si(OEt)_2$, $Et_2Si(OEt)_2$, $Et_2Si(OBu)_2$,$Pr_2$ $Si(OEt)_2$ ,$i\text{-}PrSi(OEt)_2$ ,$Pr_2$ $Si(OBu)_2$ , $BuSi(OEt)_3$ , $Bu_2Si(OEt)_2$ , $Bu_3$ Si(OEt), Bu $_2Si(OBu)_2$ , $Bu_3Si(OBu)$, $i\text{-}Bu_2Si(OEt)$ $_2$, $i\text{-}BuSi(OEt)_3$ , $i\text{-}Bu_2$ $Si(OBu)_2$, $HeSi(OEt)_3$, $He_2Se(OEt)_2$, diocytl $Si(OEt)_2$ , $Ph_2Si(OPh)_2$.

Examples containing a hydrocarbyloxy group as $R^3$and a hydrogen atom as $R^4$: there can be cited $HSi(OEt)_3$, $HSi(OBu)_3$, $HSi(OHe)_3$, $HSi(OPh)_3$ , $H_2Si(OEt)_2$, $H_3Si(OEt)$, $H_2Si(OBu)_2$, and $H_2Si(OPh)_2$ .

Examples containing a halogen atom as $R^3$ and a hydrogen atom as $R^4$:

There can be cited $HSiCl_3$, $H_2SiCl_2$, $H_3SiCl$, and $HSiBr_3$.

Examples containing a halogen atom as $R^3$ and a hydrocarbyl group as $R^4$:

There can be cited $MeSiCl_3$, $Me_2SiCl_2$, $EtSiCl_3$, $Et_2SiCl_2$, $Et_3SiCl$, $Bu_2SiCl_2$, $BuSiCl_3$, $He_2SiCl_2$, dioctyl $SiCl_2$, and $PhSiCl_3$.

Examples containing a halogen atom as $R^3$and a hydrocarbyloxy group as $R^4$:

There can be cited $Cl_2Si(OMe)_2$, $ClSi(OMe)_3$, $Cl_3Si(OEt)$, $Cl_2$ $Si(OEt)_2$, $Cl_2Si(OBu)_2$, $Cl_3Si(OHe)$, and $Cl_2Si(OPh)_2$.

Examples containing a halogen atom as $R^3$and a hydrogen atom and a hydrocarbyl group as $R^4$:

There can be cited $HSiMeCl_2$, $HSiEtCl_2$, $H_2SiEtCl$, HSiBuCl , and $HSiPhCl_2$.

(D) Titanium compound:

The titanium compound to be used is the compound of a divalent, trivalent, or tetravalent titanium. As examples of the titanium compound, there can be cited titanium tetrachloride, titanium tetrabromide, trichloroethoxy titanium, trichlorobutoxy titanium, dichloro-diethoxy titanium, dichlorobutoxy titanium, dichlorodiphenoxy titanium, chlorotriethoxy titanium, chlorotributoxy titanium, tetrabutoxy titanium, and titanium trichloride. Among other titanium compounds enumerated above, halogenides of tetravalent titanium such as titanium tetrachloride, trichloroethoxy titanium, dichloro-dibutoxy titanium, and dichloro-diphenoxy titanium prove to be desirable and titanium tetrachloride proves to be particularly desirable.

Method for Preparation of Catalyst Component

The catalyst component to be used in the present invention is obtained by bringing the metal oxide (hereinafter referred to as "Component A") into contact with the magnesium compound (hereinafter referred to as "Component B") and subsequently with the titanium compound (hereinafter referred to as "Component D") or bringing the Component A into contact with the Component B, then with the alcohol or silicon compound (hereinafter referred to as "Component C"), and subsequently with the Component D.

Contact of Component A and Component B

The contact of the Component A with the Component B is accomplished by a method which comprises stirring the two components in the presence or absence of an inert medium or a method for example, which comprises mechanically pulverizing the two components simultaneously. Examples of the inert medium usable for this purpose include hydrocarbons such as pentane, hexane, heptane, octane, decane, cyclohexane, benzene, toluene, and xylene and halogenated hydrocarbons such as 1,2-dichloroethane, 1,2-dichloropropane, carbon tetrachloride, butyl chloride, isoamyl chloride, bromobenzene, and chlorotoluene.

The contact of the Component A with the Component B is generally carried out at a temperature in the range of -20 degrees C to +150 degrees C for a period in the range of 0.1 to 100 hours, preferably at a temperature in the range of room temperature to 110 degrees C for a period in the range of 0.5 to 10 hours. When this contact entails evolution of heat, there can be adopted a method which comprises first mixing the components piecemeal at a low temperature, elevating the temperature after the two components are wholly mixed, and continue the contact of the two components.

The ratio of the amounts of the Component A and the Component B for the contact (A/B) is in the range of 1 g/0.1 to 100 m.mols, preferably 1 g/1 to 10 m.mols.

The solid product (hereinafter referred to as "Product I") of the contact between the Componant A and the Component B is then brought into contact with the Component D or with the Component C and further with the Component D. This Product I may be washed, when necessary, with a suitable cleaning agent such as, for example, the aforementioned inert medium prior to the contact. Examples of the inert medium usable for this purpose include hydrocarbons such as pentane, hexane, heptane, octane, decane, cyclohexane, benzene, toluene, and xylene and halogenated hydrocarbons such as 1,2-dichloroethane, 1,2-dichloropropane, carbon tetrachloride, butyl chloride, isoamyl chloride, bromobenzene, and chlorotoluene.

Contact with Component C

The contact of the Product I with the Component C is accomplished by a method which comprises mechanically pulverizing them simultaneously in the presence or absence of an inert medium or a method which comprises stirring them until mixture. In all such methods, the method which effects the contact by stirring them in the presence of the inert medium proves to be particularly desirable. The inert medium to be used herein may be selected from the group of compounds enumerated above.

The contact of the Product I with the Component C is generally carried out at a temperature in the range of -20 degrees C to +150 degrees C fo a period in the range of 0.1 to 100 hours, preferable at a temperature in the range of room temperature to 110 degrees C for a period in the range of 0.5 to 10 hours. When the contact entails evolution of heat, there can be adopted a method which comprises first mixing the components piecemeal at a low temperature, elevating the temperature after the two components are wholly mixed, and continue the contact of the two components.

The amount of the Component C is generally in the range of 0.05 to 50 mols, preferably 0.1 to 20 mols, per mol of the Component B. However, when Component C is a silicon compound the amount of Component C is in the range of 0.05 to 20 mols, preferably 0.1 to 10 mols, per mol of the Component B.

The solid product (hereinafter referred to as "Product II") obtained in consequence of the contact described above is brought into contact with the Component D. This solid product may be washed, when necessary, with the aforementioned inert medium prior to the contact thereof with the Component D.

## Contact with the Component D

The contact of the Component D with the Product I or the Product II is accomplished by a method which comprises mechanically pulverizing them in the presence or absence of the inert medium or a method which comprises stirring them until mixture. In these methods, the which effects the contact by stirring them in the presence of the inert medium proves to be particularly desirable. The inert medium to be used herein may be selected from the group of compounds enumerated above.

The ratio of the amounts of the Product I or Product II and the Component D for this contact is not less than 0.01 gram mol, prefer ably 0.1 to 10 gram mols, of the Component D to 1 gram atom of the magnesium in the Product I or Product II. This contact, when effected by agitation in the presence of the inert medium, is carried out at a temperature in the range of 0 degrees C to 200 degrees C for a period of 0.5 to 20 hours, preferably at a temperature in the range of 60 degrees C to 150 degrees C for a period in the range of 1 to 5 hours.

The contact of the Product I or Product II with the Component D may be divisionally effected in two or more steps. The method of contact in this case may be the same as described above. The product of the contact in the first step, when necessary, may be washed with the aforementioned inert medium and subsequently brought into contact with the remainder of the Component D (and the inert medium).

The product of the contact reaction consequently induced, when necessary, is washed with a hydrocarbon such as hexane, heptane, octane, cyclohexane, benzene, toluene, or xylene and, when necessary, further followed by drying, if necessary.

## Polymerization catalyst

The polymerization catalyst to be used in the present invention is a combination of the catalyst component obtained as described above with an organoaluminum compound.

The organoaluminum compound usable for this combination is represented by the general formula, $R_nAlX_{3-n}$ (wherein R stands for an alkyl group or an aryl group, X for a halogen atom, an alkoxy group, or a hydrogen atom, and n for any number in the range of $1 \leq n \leq 3$). Examples of advantageously usable organoaluminum compounds are alkyl aluminum compounds having 1 to 18 carbon atoms, preferable 2 to 6 carbon atoms, such as trialkyl aluminums, dialkyl aluminum monohalides, monoalkyl aluminum dihalides, alkyl aluminum sesquihalides, dialkyl aluminum monoalkoxides, and dialkyl aluminum monohyrides, mixtures thereof, and complex compounds thereof. As concrete examples, there can be cited trialkyl aluminums such as trimethyl aluminum, triethyl aluminum, tripropyl aluminum, triisobutyl aluminum, and trihexyl aluminum, dialkyl aluminum monohalides such as dimethyl aluminum chloride, diethyl aluminum chloride, diethyl aluminum bromide, diethyl aluminum iodide, and diisobutyl aluminum chloride, monoalkyl aluminum dihalides such as methyl aluminum dichloride, ethyl aluminum dichloride, methyl aluminum dibromide, ethyl aluminum dibromide, ethyl aluminum diiodide, and isobutyl aluminum dichloride, alkyl aluminum sesquihalides such as ethyl aluminum sesquichloride, dialkyl aluminum monoalkoxides such as dimethyl aluminum methoxide, diethyl aluminum ethoxide, diethyl aluminum phenoxide, dipropyl aluminum ethoxide, diisobutyl aluminum ethoxide, and diisobutyl aluminum phenoxide, and dialkyl aluminum hydrides such as dimethyl aluminum hydride, diethyl aluminum hydride, dipropyl aluminum hydride, and diisobutyl aluminum hydride. Among other organoaluminum compounds enumerated above, trialkyl aluminums specifically triethyl aluminum and triisobutyl aluminum, prove to be particularly desirable. Optionally these trialkyl aluminums can be used in combination with other organoaluminum compounds such as diethyl aluminum chloride, ethyl aluminum dichloride, ethyl aluminum sesquichloride, diethyl aluminum ethoxide, and diethyl aluminum hydride which are readily available commercially, mixtures thereof, or complex compounds thereof.

Further, those organoaluminum compounds having two or more aluminum atoms bound to each other through the medium of an oxygen atom or a nitrogen atom can also be used. As examples of the compound of this description there can be cited $(C_2H_5)$ $Al_2OAl(C_2H_5)_2$, $(C_4H_9)_2$ $AlOAl(C_4H_9)_2$, and

$$(C_2H_5)_2Al\underset{C_2H_5}{N}Al(C_2H_5)_2 .$$

While the organic metal compound can be used by itself, it may be used in combination with a electron-donating compound.

As examples of the electron-donating compound, there can be cited carboxylic acids, carboxylic anhydrides, carboxylic esters, carboxylic halogenides, alcohols, ethers, ketones, amines, amides, nitriles, aldehydes, alcoholates, phosphorus, arsenic, and antimony compounds bound to organic groups through the medium of a carbon or oxygen atom, phosphamides, thioethers, thioesters, and carbonic esters. Besides those enumerated above, such electron-donating compounds as formed of organosilicon compounds and such electron-donating compounds as containing such hetero atoms as nitrogen, sulfur, oxygen, and phosphorus are also usable.

These electron-donating compounds may be used as suitably combined in the form of mixtures of two or more members. Such an electron-donating compound may be used when the organoaluminum compound is put to use as combined with the catalyst component. Otherwise, it may be used after it has been brought into contact with the organoaluminum compound in advance.

The amount of the organoaluminum compound to be used relative to the catalyst component is generally desired to fall in the range of 1 to 2000 gram mols, preferable 20 to 500 gram mols, per gram atom of the titanium present in the catalyst component. used after it has been brought into contact with the organoaluminum compound in advance.

The amount of the organoaluminum compound to be used relative to the catalyst component is generally desired to fall in the range of 1 to 2000 gram mols, preferable 20 to 500 gram mols, per gram atom of the titanium present in the catalyst component.

The mixing ratio of the electron-donating compound to the organoaluminum compound is selected so that the amount of the organoaluminum compound as aluminum falls in the range of 0.1 to 40 gram atoms, preferable 1 to 25 gram atoms, per mol of the electron-donating compound.

The catalyst component to be used in this invention may be subjected to preparatory polymerization of ethylene and/or propylene in the presence of the organoaluminum compound, when necessary, in combination with the electron-donating compound and consequently allowed to incorporate therein 0.1 to 100 g, preferably 1 to 50 g, of the polymer of ethylene and/or propylene per g of the catalyst component in advance of the actual use. This preparatory polymerization can be carried out by the method generally adopted for the polymerization of an olefin through the agency of a Ziegler-Natta type catalyst.

## Copolymerization of ethylene and propylene

For the copolymerizaiton of ethylene and propylene, the method generally adopted is the copolymerization of olefins through the agency of a Ziegler-Natta type catalyst. Among other possible methods of polymerization, the method of bulk polymerization and the method of vapor-phase polymerizaiton both using propylene as a medium prove to be particularly desirable.

The copolymerization temperature generally falls in the range of -80C to +150C, preferable 0 C to 80 C. This copolymerization may be carried out under the application of pressure of up to 60 atmospheres.

The ethylene-propylene copolymer rubber obtained by the method of this invention has na aethylene content in the range of 15 to 90 mol%. Satisfaction of this range is attained by adjusting the ratio of the amounts of ethylene and propylene being used during the copolymerization so that the ethylene/propylene molar ratio will fall in the range of 0.01 to 1.0 in the liquid phase in the bulk polymerization using propylene as a medium or in the range of 0.03 to 3.0 int the gaseous-phase polmerization. required for removal of catalyst.

Now, the present invention will be described more specifically below with reference to working examples. Wherever percents (%) are mentioned in the working examples, they are meant percents (%) by weight unless otherwise specified.

The ethylene content of a sample polymer was determined by the infrared spectral analysis. The test for melt index (MI) was carried out by the method of ASTM D-1238 and the test for bulk density by the method of ASTM DDD=1895-69. The heata of fusion of a given sample was measured with a DSC IIc made by Perkin-Elmer Corp. and the true density thereof determined in accordance with ASTM D-1505.

Example 1

Preparation of catalyst component

Contact of silicon oxide with n-butylethyl magnesium

A flask having an inner volume of 200 ml and provided with a dropping funnel and a stirrer had the entrapped air therein displaced with nitrogen gas. This flask was charged with 5 g of silicon oxide (a product of Davison Corp. having a specific surface area of 302 $m^2/g$, a pore volume of 1.54 $cm^3/g$, and an average pore radius of 204 angstroms and marketed under Product code of "G-952") (hereinafter referred to as $SiO_2$ ) which had been fired in advance under a current of nitrogen gas at 200 degrees C for 2 hours and further at 700 degrees C for 5 hours and 20 ml of a 20% n-heptane solution of n-butylethyl magnesium (26.8 m.mols as BEM) (hereinafter referred to as "BEM") (produced by Texas Alkyls Corp, and marketed under trademark designation of "MAGALA BEM"). The contents of the flask were stirred for 1 hour.

Reaction with titanium tetrachloride

The resultant suspension was cooled to 0 degrees C and a mixed solution consisting of 20 ml of titanium tetrachloride and 50 ml of toluene was added dropwise thereto through a dropping funnel over a period of 30 minutes. After the dropwise addition was completed, the resultant reaction mixture was heated to 90 degrees C over a period of 1 hour and stirred at 90 degrees C continuously for 2 hours. After the reaction was completed, the resultant reaction mixture was decanted to expel the supernatant. The solid product consequently obtained was washed five times at room temperature with 60 ml of n-hexane. The washed solid was dried under a vacuum at room temperature for 1 hour. Consequently, there was obtained 8.0 g of a catalyst component (a) having a titanium content of 9.8%.

Copolymerization of ethylene and propylene

An autoclave having an inner volume of 1.5 liters, provided with a stirrer, and which had undergone displacement of the entrapped air with nitrogen gas was charged with 800 ml of liquefied propylene, a glass ampoule containing 5 mg of the catalyst component (a), and 1.0 m.mol of triethyl aluminum (TEAL). Then, the contents of the autoclave were heated to 40 degrees C and, at the same time, 100 ml of hydrogen and ethylene in an amount calculated to adjust the ethylene/propylene molar ratio in the liquid phase to 0.23 were added. The resultant mixture was compressed to 26.5 $kg/cm^2$. The stirrer was set rotating to break the glass ampoule and start copolymerization of the monomers. During the course of the polymerization, the ethylene/propylene molar ratio in the liquid phase was kept at 0.23 by addition of ethylene. After the polymerization was continued for 1 hour, the inner pressure of the autoclave was lowered. Then, the polymer was removed from the autoclave and dried. The polymerization activity was found to be 23.8 kg/g-catalyst component (a) hour. The polymer thus obtained was in the form of true spheres having a bulk density of 0.32 $g/cm^3$, an MI of 0.73 g/10 minutes, a true density of 0.875 $g/cm^3$, an ethylene content of 71 mol%, and a heat of fusion of 1.8 Cal/g.

Examples 2 through 4

Preparation of catalyst component

Catalyst components (b) through (d) were prepared by following the procedure of Example 1, excepting a varying magnesium compound shown below was used in the place of BEM.

| Example | Catalyst component | Magnesium compound | Titanium component (%) |
|---|---|---|---|
| 2 | b | Di-n-hexyl Mg | 10.1 |
| 3 | c | BEM (0.5 mol)-TEAL (1.0 mol) complex | - |
| 4 | d | n-BuMgCl | 8.1 |

Copolymerization of ethylene and propylene

Copolymerization of ethylene and propylene was carried out by following the procedure of Example 1, excepting each of the catalyst components obtained above was used and the conditions of the copolymerization were varied as shown in Table 1. The results were as shown in Table 1.

Copolymerization of ethylene and propylene

Copolymerization of ethylene and propylene was carried out by following the procedure of Example 1, excepting each of the catalyst components obtained above was used and the conditions of the copolymerization were varied as shown in Table 1. The results were as shown in Table 1.

Example 5

Preparation of catalyst component

Contact of $SiO_2$ with BEM was carried out by following the procedure of Example 1. The resultant suspension was decanted to expel the supernatant and the residue of decantation was washed five times with 50 ml of n-heptane and a mixed solution consisting of 10 ml of ethanol and 10 ml of n-heptane was added dropwise thereto at 0 degrees C through a dropping funnel over a period of 30 minutes. After the dropwise addition was completed, the resultant reaction mixture was washed three times with 50 ml of toluene.

Then, the contact with titanium tetrachloride was effected by following the procedure of Example 1, excepting the reaction temperature was changed to 120 degrees C. Consequently, there was obtained a catalyst component (e) having a titanium content of 1.8

Copolymerization of ethylene and propylene

Copolymerization of ethylene and propylene was carried out by following the procedure of Example 1, excepting the catalyst component (e) obtained above was used and the conditions for copolymerization indicated in Table 1 were used instead. The results were as shown in Table 1.

Examples 6 and 7

Preparation of catalyst component

A catalyst component (f) and a catalyst component (g) were prepared by following the procedure of Example 5, excepting a varying alcohol indicated below was used in the place of ethanol.

| Example | Catalyst component | Alcohol | Titanium content (%) |
|---|---|---|---|
| 6 | f | n-Butanol | 2.1 |
| 7 | g | 2,2,2-Trichloroethanol | 3.0 |

Copolymerization of ethylene and propylene

Copolymerization of ethylene and propylene was carried out by following the procedure of Example 1, excepting catalyst component (f) (Example 6) and catalyst component (g) (Example 7) were used and the conditions for copolymerization indicated in Table 1 were used instead. The results were as shown in Table 1. In Example 6, triisobutyl aluminum was used as the organoaluminum compound for copolymerization in the place of TEAL.

Example 8

Preparation of catalyst component

Contact of $SiO_2$ with n-BuMgI was carried out by following the procedure of Example 4 to obtain a suspension. A catalyst component (h) was prepared by bringing this suspension into contact with ethanol and then with titanium tetrachloride by following the procedure of Example 5.

Copolymerization of ethylene and propylene

Copolymerization of ethylene and propylene was carried out by following the procedure of Example 1, excepting that catalyst component (h) was used and the conditions of copolymerization indicated in Table 1 were used instead.

Examples 9 and 10

Preparation of catalyst component

A catalyst component (i) and a catalyst component (j) were prepared by folllowing the procedure of Example 8, excepting a varying alcohol shown below was used in the place of ethanol.

| Example | Catalyst component | Alcohol | Titanium content (%) |
|---|---|---|---|
| 9 | i | n-Butannol | 1.1 |
| 10 | j | p-Chlorophenol | - |

Copolymerization of ethylene and propylene

Copolymerization of ethylene and propylene was carried out by following the procedure of Example 1, excepting each of catalyst components (i) (Example 9) and (j) (Example 10) obtained above was used and the conditions of copolymerization indicated in Table 1 were used instead. The results were as shown in Table 1.

Examples 11 and 12

A catalyst component (k) and a catalyst component (i) having a titanium content of 6.7% were prepared by following the procedure of Example 1 or Example 9, excepting $Al_2O_3$ fired under a current of nitrogen gas at 200 degrees C for 2 hours and then at 700 degrees C for 5 hours was used in the place of $SiO_2$.

Copolymerization of ethylene and propylene

Copolymerization of ethylene and propylene was carried out by following the procedure of Example 1, excepting each of the catalyst components (k) (Example 11) and (l) (Example 12) obtained above was used and the conditions of copolymerization indicated in Table 1 were used instead. The results were as shown in Table 1.

Example 13

Preparatory polymerization of ethylene

In a flask having an inner volume of 200 ml and provided with a stirrer, 50 ml of heptane was placed after the entrapped air had been thoroughly displaced with nitrogen gas. To the flask, 0.5 g of the catalyst component (i) obtained in Example 9 and 0.5 m.mol of TEAL were added. Further, ethylene was supplied to the flask to start polymerization of ethylene at room temperature under normal atmospheric pressure. After this polymerization was continued for 1.5 hours, the supply of ethylene was discontinued and the liquid phase was removed. The solid phase of the reaction system was washed five times with 50 ml of n-hexane and then dried at room temperature. The results show that 3.5 g of ethylene was polymerized and incorporated in the catalyst component (i) per g of the catalyst.

Copolymerization of ethylene and propylene

Copolymerization of ethylene and propylene was carried out by following the procedure of Example 1, excepting the aforementioned prepolymerized catalyst component was used and the conditions of copolymerization indicated in Table 1 were used instead. The results were as shown in Table 1.

Table 1

| Example | Copolymer temperature (degrees C) | Amount of hydrogen used (lit) | Ethylene/propylene molar ratio | Polymerization activity (kg/g.cat.h) | Bulk density ($g/cm^3$) | MI (g/10 minutes) | Ethylene content (mol %) | Heat of fusion (Cal/g) | True density ($g/cm^3$) |
|---|---|---|---|---|---|---|---|---|---|
| 1 | 40 | 0.1 | 0.23 | 23.8 | 0.32 | 0.73 | 71 | 1.8 | 0.875 |
| 2 | 20 | 0.5 | 0.09 | 10.6 | 0.27 | 0.71 | 48 | - | - |
| 3 | 20 | 0.1 | 0.20 | 9.7 | 0.36 | 0.38 | 68 | 2.4 | - |
| 4 | 40 | 0.1 | 0.17 | 49.3 | 0.25 | - | 60 | 0.2 | 0.869 |
| 5 | 40 | 0.5 | 0.24 | 21.6 | 0.23 | 0.85 | 65 | - | - |
| 6 | 40 | 0.1 | 0.07 | 17.8 | 0.21 | - | 35 | - | 0.864 |
| 7 | 40 | 0.1 | 0.17 | 24.0 | 0.33 | 0.51 | 61 | -0 | - |
| 8 | 20 | 0.5 | 0.10 | 11.2 | 0.26 | - | 52 | -0 | 0.866 |
| 9 | 40 | 0.1 | 0.17 | 46.4 | 0.24 | - | 62 | 0.7 | - |
| 10 | 20 | 0.1 | 0.15 | 12.2 | 0.34 | - | 62 | -0 | - |
| 11 | 40 | 0.1 | 0.26 | 10.5 | 0.33 | 0.35 | 72 | 2.1 | - |
| 12 | 40 | 0.1 | 0.23 | 11.7 | 0.34 | - | 63 | - | - |
| 13 | 40 | 0.1 | 0.17 | 27.3 | 0.38 | - | 63 | 0.1 | - |

Example 14

Preparation of catalyst component

Contact of silicon oxide with n-butylethyl magnesium

Contact of silicon oxide with n-butylethyl magnesium was carried out by following the procedure of Example 1 to obtain a suspension.

Contact with ethyl orthosilicate

The supernatant was removed by decantation from the suspension obtained by the above procedure. The residue of the decantation was admixed with 20 ml of n-heptane. A mixed solution consistin of 20 ml of ethyl orthosilicate [Si(OEt)4] and 30 ml of n-heptane was added thereto at room temperature though a dropping funnel over a period of 30 minutes. After completion of this dropwise addition of the mixed solution, the reaction mixture was heated to 50 degrees C over a period of 1 hour and stirred at 50 degrees for 1 hour. After completion of the reaction, the resultant reaction mixture was decanted to expel the supernatant. The solid reaction product was washed five times with 50 ml of n-hexane.

Reaction with titanium tetrachloride

The solid product obtained consequently, 50 ml of toluene, and 20 ml of titanium tetrachloride were stirred at 90°C for 2 hour. After completion of the reaction, the reaction mixture was decanted to expel the supernatant. The solid product consequently obtained was washed five times with 60 ml of n-hexane at room temperature. The solid product was dried at room temperature under a vacuum for 1 hour. Consequently, there was obtained 8.1 g of a catalyst component (m) having a titanium content of 7.3%.

Copolymerization of ethylene and propylene

An autoclave haing an inner volume of 1.5 liters, provided with a stirrer, and which had undergone displacement of the entrapped air with nitrogen gas was charged with 800 ml of liquefied propylene, a glass ampoule containing 5 mg of the catalyst component (m), and 1.0 m.mol of triethyl aluminum (TEAL). Then, the contents of the autoclave were heated to 40°C and, at the same time, 100 ml of hydrogen and ethylene in an amount calculated to adjust the ethylene/propylene molar ratio in the liquid phase to 0.25 were added. The resultant mixture was compressed to 27.4 kg/$cm^2$. The stirrer was set rotating to break the glass ampoule and start copolymerization of the monomers. During the course of the polymerization, the ethylene/propylene molar ratio in the liquid phase was kept at 0.25 by addition of ethylene. After the polymerization was continued for 1 hour, the inner pressure of the autoclave was lowered. Then, the polymer was removed from the autoclave and dried. The polymerization activity was found to be 51.6 kg/g-catalyst component (m) .hour. The polymer thus obtained was in the form of true spheres having a bulk density of 0.28 g/$cm^3$, an MI of 0.54 g/10 minutes, a true density of 0.868 g/$cm^3$, an ethylene content of 64 mol%, and a heat of fusion of 0.4 Cal/g.

Examples 15 and 16

Preparation of catalyst component

Catalyst components (n) and (o) were prepared by following the procedure of Example 14 excepting a varying silicon compound shown below was used in the place of $Si(OEt)_4$.

| Example | Catalyst component | Silicon compound | Titanium content (%) |
|---|---|---|---|
| 15 | n | SiCl4 | 8.6 |
| 16 | o | HSiCl3 | - |

Copolymerization of ethylene and propylene

Copolymerization of ethylene and propylene was carried out by following the procedure of Example 14, exceptin each of the catalyst components obtained above was used and the conditions of the copolymerization were varied as shown in Table 2. The results were as shown in Table 2.

Examples 17 - 20

Preparation of catalyst component

Catalyst components (p) through (s) were prepared by following the procedure of Example 14, excepting a varying magnesium compound and a varying silicon compound indicated below were used instead.

| Example | Catalyst component | Magnesium compound | Silicon compound | Titanium component (%) |
|---|---|---|---|---|
| 17 | p | n-BuMgCl | Si(OEt) | 4.9 |
| 18 | q | Di-n-hexyl Mg | HSiEtCl | - |
| 19 | r | BEM (0.5 mol) - TEAL (1.0 mol complex | EtSiCl | 6.9 |
| 20 | s | Mg(OEt) | HSiCl | 0.6 |

Copolymerization of ethylene and propylene

Copolymerization of ethylene and propylene was carried out by following the procedure of Example 14, excepting a varying catalyst component obtained above was used and the conditions for copolymeriza tion indicated in Table 2 were used insted. The results were as shown in Table 2. In Example 19, triisobutyl aluminum was used in the place of TEAL as an organoaluminum compound during the course of copolymerization.

Examples 21 and 22

Preparation of catalyst component

A catalyst component (t) and a catalyst component (u) (titanium content 3.8%) were prepared by respectively following the procedures of Example 15 and Example 17, excepting $Al_2O_3$ fired under a current of nitrogen gas at 200 degrees C for 2 hours and further at 700 degrees C for 5 hours was used in the place of $SiO_2$.

Copolymerization of ethylene and propylene

Copolymerization of ethylene and propylene was carried out by following the procedure of Eample 14, excepting a varying catalyst component obtained above was used and the conditions for copolymerization indicated in Table 2 were used instead. The results were as shown in Table 2.

Example 23

Preparatory polymerization of ethylene

In a flask having an inner volume of 200 ml and provided with a stirrer, 50 ml of heptane was placed after the entrapped air had been thoroughly displaced with nitrogen gas. To the flask, 0.5 g of the catalyst component (p) obtained in Example 17 and 0.5 m.mol of TEAL were added. Further, ethylene was supplied to the flask to start polymerization of ethylene at room temperature under normal atmospheric pressure. After this polymerization was continued for 1.5 hours, the supply of ethylene was discontinued and the liquid phase was removed. The solid phase of the reaction system was washed five times with 50 ml of n-hexane and then dried at room temperature. The results show that 2.8 g of ethylene was polymerized and incorporated in the catalyst component (p) per g of he catalyst.

Copolymerization of ethylene and propylene

Copolymerization of ethylene and propylene was carried out by following the procedure of Example 14 excepting the aforementioned prepolymerized catalyst component was used and the conditions of copolymerization indicated in Table 2 were used instead. The results were as shown in Table 2.

| Example | Copolymer temperature ($^{o}C$) | Amount of hydrogen used (lit) | Ethylene/ propylene molar ratio | Polymerization activity (kg/ g.cat.h) | Bulk density (g/cm ) | MI (g/10 minutes) | Ethylene content (mol %) | Heat of fusion (Cal/g | True density (g/cm ) |
|---|---|---|---|---|---|---|---|---|---|
| 14 | 40 | 0.1 | 0.25 | 51.6 | 0.28 | 0.54 | 64 | 0.4 | 0.868 |
| 15 | 40 | 0.1 | 0.25 | 31.9 | 0.34 | 0.12 | 73 | 2.2 | - |
| 16 | 40 | 0.1 | 0.10 | 33.8 | 0.23 | - | 49 | - | - |
| 17 | 40 | 0.1 | 0.22 | 43.1 | 0.26 | 0.71 | 61 | -0 | - |
| 18 | 20 | 0.1 | 0.20 | 14.1 | 0.33 | 0.33 | 68 | - | 0.872 |
| 19 | 20 | 0.1 | 0.05 | 12.2 | 0.26 | - | 37 | - | - |
| 20 | 40 | 0.1 | 0.27 | 65.0 | 0.36 | 0.68 | 72 | 1.5 | 0.875 |
| 21 | 20 | 0.5 | 0.15 | 7.8 | 0.38 | - | 69 | - | - |
| 22 | 40 | 0.1 | 0.15 | 19.4 | 0.28 | 0.76 | 49 | - | - |
| 23 | 40 | 0.1 | 0.22 | 45.5 | 0.35 | - | 63 | 0.1 | - |

## Claims

1. A method for the production of an ethylene-propylene copolymer rubber having an ethylene content of 15 to 90 mole prcent characterized by copolymerizing ethylene and propylene in the presence of a polymerization catalyst comprising (X), a catalyst component obtainable or obtained by contacting (A) a metal oxide with (B) a magnesium compound of the general formula $R^1MgR^2$, wherein $R^1$ represents a hydrocarbyl group or a hydrocarbyloxy group and $R^2$ represents a hydrocarbyl or a hydrocarbyloxy group or a halogen atom and subsequently contacting the resulting product with (D) a titanium compound; and (Y) an organoaluminum compound.

2. A method according to claim 1 further characterized in that prior to contacting said resulting product with said titanium compound, said resulting product is contacted with (C) an alcohol.

3. A method according to claim 2 further characterized in that the amount of said alcohol ranges from 0.05 to 50 moles per mole of said magnesium compound.

4. A method according to claims 2 or 3 further characterized in that said alcohol is selected from the group consisting of aliphatic alcohols, aromatic alcohols, halogen-containing alcohols and mixtures thereof.

5. A method according to claim 1 further characterized in that prior to contacting said resulting product with said titanium compound, said resulting product is contacted with (C) a silicon compound of the general formula $SiR^3{}_nR^44_{n-1}$ wherein $R^3$ represents a hydrocarbyloxy group or a halogen atom, $R^4$ represents a member selected from the group consisting of a hydrogen atom, a hydrocarbyl group, a hydrocarbyloxy group and halogen atoms and n represents an integer having a value of 1 to 3.

6. A method according to claim 5 further characterized in that the amount of said silicon compound ranges from 0.05 to 20 moles per mole of said magnesium compound.

7. A method according any one of claims 1-6 further characterized in that said ethylene and said propylene are copolymerizsed at a molar ratio ranging from 0.01:1 to 1:1 in the liquid phase.

8. A method according to any one of claims 1-6 further characterized in that said ethyldne and said proopylene are copolymerised at a molar ratio ranging from 0.03:1 to 3:1 in the gaseous phase.

9. A catalyst for the production of an ethylene-propylene copolymer rubber having an ethylene content of 5 to 90 mole percent which comprises (X), a catalyst component obtainable or obtained by contacting (A) a metal oxide with (B) a magnesium compound of the general formula $R^1M_gR^2$, wherein $R^1$ represents a hydrocarbyl group or a hydrocarbyloxy group and $R^2$ represents a hydrocarbyl or a hyrdrocarbyloxy group or a halogen atom and subsequently contacting the resulting product with (D) a titanium compound, and (Y) an organoaluminium compound.

FIG.I

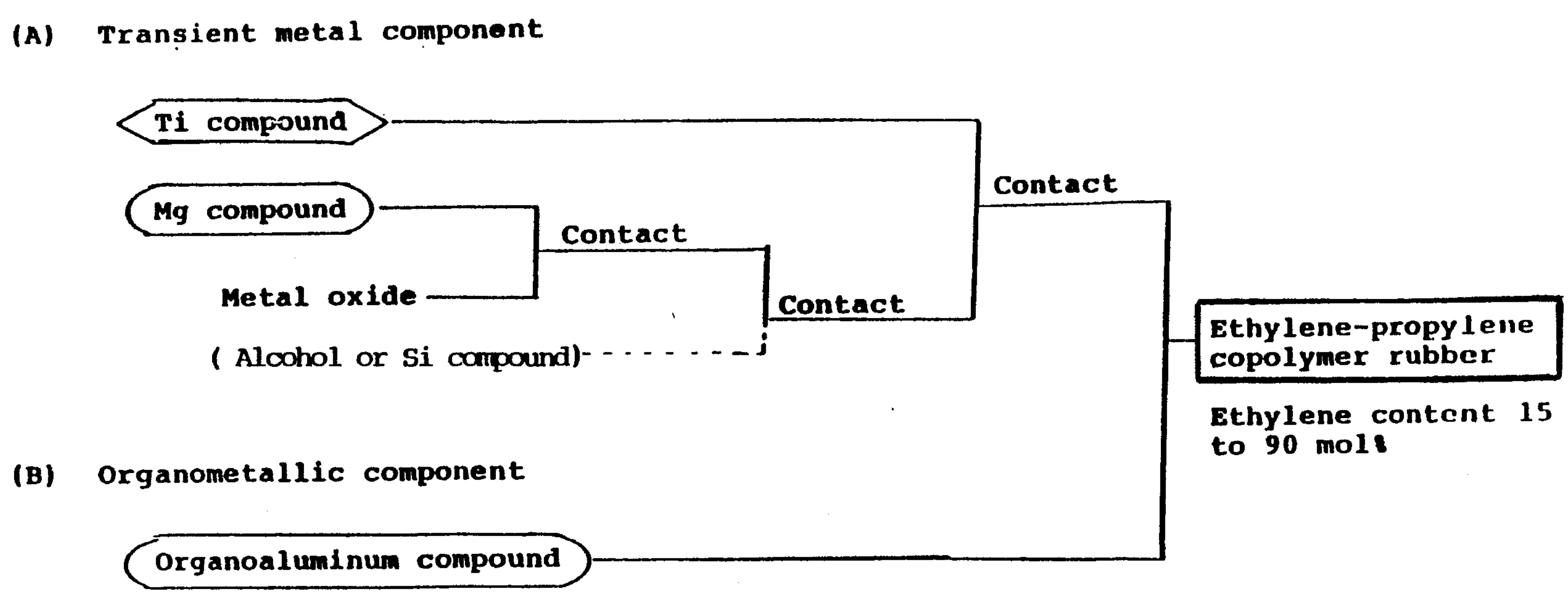
(A) Transient metal component
Ti compound
Mg compound
Metal oxide
( Alcohol or Si compound)
Contact
Contact
Contact
(B) Organometallic component
Organoaluminum compound
Ethylene-propylene copolymer rubber
Ethylene content 15 to 90 mol%